# EUROPÄISCHE PATENTANMELDUNG

(11) **EP 4 050 686 A2**
(43) Veröffentlichungstag der Anmeldung: **31.08.2022**
(21) Anmeldenummer: 22158395.8
(22) Anmeldetag: 24.02.2022
(51) Int. Cl.: H01M 8/00, H01M 8/0213, H01M 8/0221, H01M 8/0226

(54) **VERFAHREN ZUM KONTINUIERLICHEN HERSTELLEN VON BIPOLARPLATTEN AUS MIT ELEKTRISCH LEITFÄHIGEN PARTIKELN VERSETZTEM KUNSTSTOFF**

(30) Priorität: 25.02.2021 DE 102021104564
(71) Anmelder: Eisenhuth GmbH & Co. KG, 37520 Osterode (DE)
(72) Erfinder: Derieth, Dr. Thorsten, 47652 Weeze (DE); Hickmann, Dr. Thorsten, 37520 Osterode (DE)
(74) Vertreter: REHBERG HÜPPE + PARTNER

(57) **Zusammenfassung**

Zum kontinuierlichen Herstellen von in Bipolarplatten oder Rohlinge (15) für Bipolarplatten aufteilbarem bandförmigem Plattenmaterial (19) aus mit elektrisch leitfähigen Partikeln (2) versetztem Kunststoff (1) werden die Partikel (2) und der Kunststoff (1) zu einem Compound (10) compoundiert, wobei ein Anteil der Partikel an dem Compound (10) zwischen 75 und 90 Gewichtsprozent beträgt. Das Compound (10) wird kryogen zu einem Pulver (12) vermahlen. Das Pulver (12) wird zu einer Vorform (15) gestreut, und die Vorform (15) wird zwischen einem Unterband (16) und einem Oberband (18) einer Doppelbandpresse (17) heiß zu dem Plattenmaterial (19) verpresst.

## Beschreibung

### TECHNISCHES GEBIET DER ERFINDUNG

Die Erfindung bezieht sich auf ein Verfahren zum kontinuierlichen Herstellen von in Bipolarplatten oder Rohlinge für Bipolarplatten aufteilbarem bandförmigem Plattenmaterial aus mit elektrisch leitfähigen Partikeln versetztem Kunststoff. Insbesondere bezieht sich die Erfindung auf ein solches Verfahren mit den Merkmalen des Oberbegriffs des unabhängigen Patentanspruchs 1.

Bipolarplatten finden z. B. in Brennstoffzellenstapeln Verwendung. Sie dienen dabei zur Stromableitung aus den einzelnen Brennstoffzellen des Stapels und zur elektrischen Reihenschaltung der Brennstoffzellen zwecks Spannungserhöhung. Bipolarplatten können als glatte Platten ausgebildet sein oder an einer oder beiden ihrer Hauptseiten konturiert sein. Mit Hilfe einer solcher Konturierung können beispielsweise Gasführungskanäle in den Hauptseiten der Bipolarplatten ausgebildet sein.

Grundsätzlich können Bipolarplatten aus Metall ausgebildet werden. Bipolarplatten aus Metall, die nicht aus besonders beständigen und entsprechend teuren Metallen wie Gold oder Titan bestehen oder aufwändig beschichtet sind, neigen jedoch zur Korrosion. Weiterhin sind bei Bipolarplatten aus Metall in der Regel zusätzliche Dichtungen zur Abdichtung des Brennstoffzellenstapels quer zu seiner Stapelrichtung erforderlich.

Diese Nachteile von Bipolarplatten aus Metall sind bei Bipolarplatten aus elektrisch leitfähigem Kunststoff beseitigt. Dabei beruht die elektrische Leitfähigkeit des Kunststoffs in der Regel auf elektrisch leitfähigen Partikeln, mit denen der Kunststoff versetzt ist.

### STAND DER TECHNIK

Aus der US 4 426 340 A ist ein Verfahren zur Herstellung von Gegenständen aus mit Harz gebundenen Kohlenstofffasern und insbesondere von Elektroden für elektrochemische Zellen bekannt, die unterschiedliche Porengrößen in unterschiedlichen Bereichen aufweisen sollen. Bei dem bekannten Verfahren werden gleichzeitig verschiedene Mischungen von Kohlenstofffasern und Harz in unterschiedlichen Bereichen eines Formwerkzeugs erhitzt und verdichtet. Die Kohlenstofffasern in den unterschiedlichen Mischungen haben unterschiedliche Schüttdichten. Die unterschiedlichen Mischungen werden nacheinander auf das sich kontinuierlich bewegende bandförmige Formwerkzeug aufgestreut und dann in einer Verdichtungsvorrichtung mit Walzen verdichtet, zwischen denen hindurch die Mischungen zusammen mit dem bandförmigen Formwerkzeug hindurch geführt werden. Die fertigen Bauteile bzw. Elektroden können in Längsrichtung des bandförmigen Formwerkzeugs verlaufende Rippen aufweisen.

Aus der EP 2 801 121 B1 ist ein Verfahren zur Herstellung einer Flussfeldplatte bekannt, bei dem Graphit und Harzmaterialien gemischt werden, um ein geschmolzenes Gemisch bereitzustellen. Das geschmolzene Gemisch wird zu einer fortlaufenden Flussfeldplatte geformt. Die fortlaufende Flussfeldplatte wird in einzelne Flussfeldplatten unterteilt. Dabei werden Flussfeldkanäle entweder in der fortlaufenden Flussfeldplatte oder den einzelnen Flussfeldplatten ausgebildet. Das Formen des Gemisches zu der fortlaufenden Flussfeldplatte umfasst das Extrudieren des Gemisches durch ein Mundstück, wobei das Harz an dem Ausgang des Mundstücks eine Temperatur oberhalb der Temperatur aufweist, bei der es zu schmelzen beginnt, und unterhalb der Temperatur, bei der es vollständig geschmolzen ist. Ein Füllstoff/Feststoff-Verhältnis beträgt zwischen 40:60 und 60:40. Das Harz wird vorzugsweise aus fluoriertem Ethylenpropylen, Perfluoralkoxi-Copolymer und Polytetrafluorethylen ausgewählt. Das gewünschte Profil der Flussfeldplatte wird durch das Extrudieren des Gemisches durch das Mundstück mit dem gewünschten Profil erreicht. Der Extrudierschritt umfasst ein Einbringen des Gemisches in einen Zylinder und ein gleitbewegliches Versetzen eines Presskolbens durch den Zylinder, um das Gemisch durch das Mundstück mit dem gewünschten Profil zu drängen, wobei der Schritt des gleitbeweglichen Versetzens vorzugsweise ohne Drehen des Presskolbens um seine Achse erfolgt. Alternativ wird durch das Extrudieren zunächst eine Paste hergestellt, die dann in einer Doppelbandpresse unter Einwirkung von Druck und Temperatur zu der mit den Flussfeldkanälen versehenen Flussfeldplatte geformt wird.

Aus der WO 2015 / 088 472 A1 und der zur selben Patentfamilie gehörigen US 2016/ 0 233 518 A1 ist ein Verfahren zum Herstellen einer Bipolarplatte oder einer Vorform dafür bekannt, bei dem Kohlenstofffasern und ein duroplastisches Harz zu einer Vorform gestreut und dann zwischen einem Unterband und einem Oberband einer Doppelbandpresse heiß verpresst werden. Das bekannte das Verfahren umfasst im Einzelnen: Ausgeben von Kohlenstofffasern mit einer Länge zwischen 3 und 12 Millimetern aus einem ersten Trichter in eine Mischkammer einer Doppeltrichter-Schaufelwalzen-Streumaschine; gleichzeitig mit dem Abscheiden der Kohlenstofffasern in die Mischkammer, Abscheiden eines duroplastischen Harz-Pulvers aus einem zweiten Trichter der Doppeltrichter-Schaufelwalzen-Streumaschine in die Mischkammer, und Mischen der Kohlenstofffasern und des duroplastischen Harz-Pulvers; anschließend, Ausströmenlassen einer ausreichenden Menge des Gemisches auf ein bewegtes Trägerband einer Doppelbandpressvorrichtung, um eine Schicht des Gemisches auf dem bewegten Trägerband zu bilden; anschließend, Komprimieren des Gemisches zwischen dem bewegten Trägerband und einem bewegten Kompressionsband der Doppelbandpressvorrichtung auf eine vorbestimmte Dicke, während gleichzeitig das Gemisch erwärmt wird, und Weiterreichen des komprimierten, erwärmten Gemisches zwischen die Bänder für eine ausreichende Verweilzeit innerhalb der Doppelbandpressvorrichtung, um das duroplastische Harz erst zu schmelzen und dann auszuhärten; anschließend, Weiterreichen des gehärteten Gemisches als Vorläufersubstrat für eine Brennstoffzelle aus der Doppelbandpressvorrichtung. Das einzige angegebene Verhältnis von Kohlenstofffasern zu duroplastischem Harz ist 45% Kohlenstofffasern zu 55% Phenolharzpulver.

Aus der DE 10 2009 051 434 A1 ist ein Formkörper aus einer hochleitfähigen Formmasse bekannt, die mindestens einen Kunststoff und mindestens einen in den Kunststoff eingearbeiteten Füllstoff enthält. Die Formmasse ist elektrisch leitend und thermoformbar. Hergestellt wird der Formkörper durch homogenes Einarbeiten des Füllstoffs in den Kunststoff, Formgebung der Formmasse durch ein Urformverfahren und Formgebung der Formmasse durch ein Umformverfahren. Die Formmasse wird vor der Formgebung temperiert. Die Formgebung der Formmasse kann durch Kalandrieren oder Extrudieren erfolgen.

Aus der DE 10 2013 107 514 A1 ist ein Verfahren zur Herstellung eines Verbundhalbzeugs bekannt, das eine kontinuierliche Phase umfassend wenigstes einen thermoplastischen Kunststoff und eine disperse Phase aus wenigstens einem elektrisch leitfähigen Füllstoff aufweist. Bei dem Verfahren werden zunächst der thermoplastische Kunststoff und der Füllstoff separat kryogen vermahlen. Dann werden der thermoplastische Kunststoff und der Füllstoff in Form feiner Partikel vermischt. Die Mischung wird auf eine Temperatur größer als die Schmelztemperatur des thermoplastischen Kunststoffs erwärmt. Nach einer Formgebung wird das erwärmte Material auf eine Temperatur unterhalb der Erstarrungstemperatur des thermoplastischen Kunststoffs abgekühlt. Der elektrisch leitfähige Füllstoff besteht vorzugsweise aus Kohlenstoff, Graphit, Ruß, Titancarbid oder einem Metall. Der thermoplastische Kunststoff besteht aus Polyethylen (PE), Polypropylen (PP), Polyphenylensulfid (PPS), Polyetheretherketon (PEEK), Polyvinylchlorid (PVC) und/oder Polyamid (PA). Die Partikel, zu denen der thermoplastische Kunststoff vermahlen wird, sind zu 90 % kleiner als 500 µm, vorzugweise kleiner als 300 µm und insbesondere kleiner als 200 µm. Das Erwärmen und Abkühlen erfolgt mit Hilfe eines Walzwerks mit einer beheizbaren Walze und einer kühlbaren Walze. Die Formgebung erfolgt in einem Extruder.

Ein Verfahren zum kontinuierlichen Herstellen von in Bipolarplatten oder Rohlinge für Bipolarplatten aufteilbarem bandförmigem Plattenmaterial aus mit elektrisch leitfähigen Partikeln versetztem Kunststoff mit den Merkmalen des Oberbegriffs des unabhängigen Patentanspruchs 1 ist aus der US 2003/ 0 129471 A1 bekannt.

Neben der kontinuierlichen Herstellung von Bipolarplatten oder von Vorformen für Bipolarplatten als bandförmiges Plattenmaterial, das in einzelne Platten unterteilt wird, sind auch Verfahren bekannt, bei denen als Bipolarplatten oder als Rohlinge für Bipolarplatten verwendbare Platten einzeln durch heiß Verpressen von Ausgangsmaterialien in einem Formwerkzeug hergestellt werden. Diese Bipolarplatten oder Rohlinge weisen in der Regel eine höhere Isotropie ihrer elektrischen Eigenschaften und insbesondere eine höhere elektrische Leitfähigkeit normal zu ihrer Haupterstreckungsebene auf als Bipolarplatten und Rohlinge, die ihre Form durch Extrudieren oder Kalandrieren erhalten haben. Bei der Massenherstellung von Bipolarplatten und deren Vorformen erweist sich jedoch eine Einzelherstellung durch Verpressen der Ausgangsmaterialien in einem Formwerkzeug als großes Hindernis für das Erreichen hoher Produktionsraten.

### AUFGABE DER ERFINDUNG

Der Erfindung liegt die Aufgabe zugrunde, ein Verfahren zum kontinuierlichen Herstellen von in Bipolarplatten oder Rohlinge für Bipolarplatten aufteilbarem bandförmigem Plattenmaterial aus mit elektrisch leitfähigen Partikeln versetztem Kunststoff aufzuzeigen, das für hohe Produktionsraten geeignet ist und dennoch zu einem Plattenmaterial mit hoher elektrischer Leitfähigkeit, insbesondere orthogonal zu seiner Haupterstreckungsebene, d. h. zwischen seinen Hauptseiten, führt.

### LÖSUNG

Die Aufgabe der Erfindung wird durch ein Verfahren mit den Merkmalen des unabhängigen Patentanspruchs 1 gelöst. Bevorzugte Ausführungsformen des erfindungsgemäßen Verfahrens sind in den abhängigen Patentansprüchen definiert.

### BESCHREIBUNG DER ERFINDUNG

Bei einem erfindungsgemäßen Verfahren zum kontinuierlichen Herstellen von in Bipolarplatten oder Rohlinge für Bipolarplatten aufteilbarem bandförmigem Plattenmaterial aus mit elektrisch leitfähigen Partikeln versetztem Kunststoff werden die Partikel und der Kunststoff zu einem Compound compoundiert, wobei ein Anteil der Partikel an dem Compound zwischen 75 und 90 Gewichtsprozent beträgt. Das Compound wird kryogen zu einem Pulver vermahlen. Das Pulver wird zu einer Vorform gestreut, und die Vorform wird zwischen einem Unterband und einem Oberband einer Doppelbandpresse heiß zu dem Plattenmaterial verpresst.

Das bandförmige Plattenmaterial kann direkt nach dem Abkühlen oder nach einer weiteren Bearbeitung im noch heißen oder abgekühlten Zustand in einzelne Platten aufgeteilt werden, die dann als Bipolarplatten oder als Rohlinge für Bipolarplatten verwendbar sind. Das Aufteilen des bandförmig anfallenden Plattenmaterials in die einzelnen Platten kann aber auch in größerem zeitlichen und räumlichen Abstand zu den vorhergehenden Verfahrensschritten erfolgen. Dann kann das Plattenmaterial zunächst zu einem Coil aufgewickelt und später zum weiteren Bearbeiten und/oder Aufteilen wieder abgewickelt werden. Das Aufwickeln zu einem Coil setzt eine hohe Flexibilität des Plattenmaterials voraus, die aber bei dem erfindungsgemäßen Verfahren durch Verwendung eines darauf abgestimmten Kunststoffs erreichbar ist. Zugleich geht eine hohe Flexibilität des Plattenmaterials mit einer hohen Gasdichtigkeit einher, und zwar sowohl mit einer hohen Gasdichtigkeit der späteren Bipolarplatten orthogonal zur Haupterstreckungsebene als auch mit einer hohen Gasdichtigkeit daraus ausgebildeter Brennstoffzellenstapel, in denen die Bipolarplatten Dichtungsfunktion übernehmen, quer zur Stapelrichtung.

Bei dem erfindungsgemäßen Verfahren wird erheblicher Aufwand für die Ausbildung der Vorform betrieben, die dann zwischen dem Unterband und dem Oberband der Doppelbandpresse heiß zu dem Plattenmaterial verpresst wird. Dieser hohe Aufwand umfasst die erste Stufe des Compoundierens zu einem Compound. Aus diesem Compound wird jedoch nicht direkt die Vorform ausgebildet, sondern das Compound wird zunächst zu einem Pulver vermahlen, und erst aus diesem Pulver wird die Vorform gestreut. Hiermit wird eine sehr große Homogenität der Verteilung der elektrisch leitfähigen Partikel in dem Kunststoff und insbesondere eine hohe Isotropie der elektrischen Eigenschaften des mit den elektrisch leitfähigen Partikeln versetzten Kunststoffs, einschließlich einer hohen elektrischen Leitfähigkeit zwischen den Hauptseiten der fertigen Platten erreicht. Diese hohe Homogenität und Isotropie stellen sich nicht ein, wenn auf das Vermahlen des Compounds nach dem Compoundieren verzichtet wird oder der Kunststoff und die elektrisch leitfähigen Partikel ohne vorheriges Compoundieren vermahlen, d. h. nur nach Mischen in Pulverform zu der Vorform gestreut werden.

Die Verwendung der Doppelbandpresse für das heiß Verpressen der Vorform zu dem Plattenmaterial ist ebenfalls entscheidend. In einer Doppelbandpresse tritt beim Verpressen keine Relativbewegung der Vorform relativ zu dem Unterband und dem Oberband auf, die eine Scherung der Vorform und eine hieraus resultierende Anisotropie der hergestellten Platten zur Folge hätte. Insoweit ist die Bewegung der Vorform - oder besser die Nicht-Bewegung der Vorform gegenüber den formgebenden Flächen - vergleichbar mit dem linearen Verpressen der Ausgangsmaterialien in ein Formwerkzeug. Das nach dem erfindungsgemäßen Verfahren hergestellte Plattenmaterial zeichnet sich also wie gewünscht durch eine hohe Isotropie seiner elektrischen Leitfähigkeit und eine entsprechend hohe elektrische Leitfähigkeit zwischen seinen Hauptseiten aus. Wie bereits angesprochen weist das Plattenmaterial bei Verwendung eines darauf abgestimmten Kunststoffs zudem eine hohe Flexibilität und Gasdichtigkeit auf. Dies gilt auch für den bei dem erfindungsgemäßen Verfahren hohen Füllungsgrad des Kunststoffs mit den elektrisch leitfähigen Partikeln.

Konkret können die elektrisch leitfähigen Partikel und der Kunststoff in einem Schneckenextruder zu dem Compound compoundiert werden. Noch konkreter kann dieser Schneckenextruder ein Doppelschneckenextruder sein, dessen Schnecken beim Compoundieren gleichläufig drehangetrieben werden. In einem Schneckenextruder, insbesondere einem Doppelschneckenextruder mit gleichläufig drehangetriebenen Schnecken, wird ein homogenes Compound mit bereits sehr gleichmäßiger Verteilung der elektrisch leitfähigen Partikel in dem Kunststoff erzielt.

Bei den elektrisch leitfähigen Partikeln kann es sich insbesondere um solche auf Kohlenstoffbasis, konkret um Rußpartikel und/oder Graphitpartikel und/oder CNT, d. h. Kohlenstoffnanoröhren mit der englischen Bezeichnung Carbon Nanotubes, handeln. Grundsätzlich können aber auch andere elektrisch leitfähige Füllstoffe Verwendung finden, wie sie aus dem Stand der Technik bekannt sind. Der Füllungsgrad, in dem die elektrisch leitfähigen Partikel auf Kohlenstoffbasis bei dem erfindungsgemäßen Verfahren eingesetzt werden, d. h. ihr Anteil an dem Compound und dem hergestellten Plattenmaterial in Gewichtsprozent, beträgt zwischen 75 % und 90 % und ist damit im Vergleich zu bekannten Bipolarplatten aus mit elektrisch leitfähigem Kohlenstoffmaterial versetztem Kunststoff recht hoch. Dabei steigt die elektrische Leitfähigkeit des Plattenmaterials mit dem Füllungsgrad an. Die Flexibilität und die Gasdichtigkeit des Plattenmaterials nehmen zwar mit dem Füllungsgrad tendenziell ab, bei dem erfindungsgemäßen Verfahren sind aber auch die Flexibilität und die Gasdichtigkeit nicht nur ausreichend, sondern bei Füllungsgraden von bis zu nahe 90 % überraschend hoch. Dies gilt trotz der wirtschaftlichen Herstellung auf der Doppelbandpresse.

Der bei dem erfindungsgemäßen Verfahren verwendete Kunststoff kann grundsätzlich ein Duroplast, beispielsweise auf Phenolharzbasis, sein. Vielfach handelt es sich aber um einen Thermoplast, bevorzugt um einen Thermoplast auf polyolefinischer Basis, insbesondere wenn auf die Flexibilität des Plattenmaterials Wert gelegt wird. Konkret kann der Kunststoff zumindest überwiegend aus Polyethylen (PE) oder Polypropylen (PP) bestehen. Auch Polyphenylensulfid (PPS) und Polyvinylidenfluorid (PVDF) können eingesetzt werden, um von deren thermischer und chemischer Beständigkeit Gebrauch zu machen. Beim Abmischen des Kunststoffs ist eine ausreichend hohe Schlagzähigkeit einzustellen. Dazu können besonders schlagzähe Kunststoffzusammensetzungen und bei Bedarf auch spezielle, die Schlagzähigkeit modifizierende Zusätze Verwendung finden.

Das Vermahlen des Compounds zu dem Pulver erfolgt kryogen, d. h. bei Temperaturen deutlich unterhalb 0 °C, vorzugsweise unterhalb -70 °C, und optional hochenergetisch, d. h. mit hohem Energieeinsatz, von typischerweise mehreren tausend J/g Compound also mindestens 2.000 J/g Compound und beispielsweise von 4.000 J/g bis 8.000 J/g oder etwa 6.000 J/g Compound. Sowohl das kryogene als auch das hochenergetische Vermahlen haben das Ziel, das Compound schnell und ohne weitergehende Veränderung in kleine Teilchen zu pulverisieren. Angestrebt wird dabei eine Teilchengröße, bei der mindestens 90 Gewichts-% der Teilchen kleiner als 100 µm sind. Diese Teilchengrößen sind mit kommerziell verfügbaren kryogen oder kryogen und hochenergetisch mahlenden Mühlen auch bei schlagzähen Kunststoffen realisierbar.

Bei dem erfindungsgemäßen Verfahren kann die gestreute Vorform ohne Vorkompaktierung in einen Walzenspalt zwischen den Walzen eines ersten beheizten Walzenpaars der Doppelbandpresse, das das Oberband und das Unterband rückwärtig abstützt, eingeführt werden.

Um die noch nicht zusammenhängende gestreute Vorform sicher in die Doppelbandpresse zu überführen, kann die Vorform auf einem vorgezogenen Unterband der Doppelbandpresse oder auf einem separaten Förderband ausgebildet und darauf durch die Doppelbandpresse gefördert werden.

Eine Fördergeschwindigkeit, mit der die Vorform zwischen dem Oberband und dem Unterband durch die Doppelbandpresse gefördert wird, liegt in einem typischen Bereich zwischen 1,7 mm/s und 333 mm/s, bevorzugt zwischen 8,3 mm/s und 167 mm/s und besonders bevorzugt zwischen 16,7 mm/s und 117 mm/s.

Bei ihrem Eintreten in die Doppelbandpresse wird die Vorform kompaktiert, indem Luft aus der aus Pulver gestreuten Vorform herausgedrückt wird. Eine Dicke der Vorform wird dabei gegenüber dem hergestellten Plattenmaterial in der Regel um 50 % bis 85 % und typischer Weise um 70 % bis 80 % reduziert. In einem Heißpressbereich der Doppelbandpresse kann die Vorform dann je nach dem eingesetzten Kunststoff gezielt auf eine Temperatur in einem Bereich von mindestens etwa 100 °C bis 400 °C erwärmt und heiß zu dem Plattenmaterial verpresst werden. Bei Duroplasten kann die Temperatur, bei der heiß verpresst wird, mit zwischen 100 °C und 200 °C relativ niedrig liegen. Bei Thermoplasten auf polyolefinischer Basis liegt die Temperatur des heiß Verpressens typischer Weise zwischen 170 °C und 260 °C, und bei hochtemperaturfesten Thermoplasten zwischen 330 °C und 400 °C. Dabei kann die Temperatur der Bänder der Doppelbandpresse jeweils in aufeinander folgenden Zonen des Heißpressbereichs unterschiedlich eingestellt werden, beispielsweise zunächst etwas höher, um die Vorform schneller aufzuheizen, und dann näher an der Zieltemperatur, die beim heiß Verpressen in der Vorform erreicht werden soll.

Das heiße Verpressen der Vorform zu dem Plattenmaterial kann unter einem auf einen Enddruck ansteigenden Druck erfolgen. Bevorzugt erfolgt das heiße Verpressen der Vorform zu dem Plattenmaterial aber unter einem Druck, der über eine längere oder auch die gesamte von der Vorform in der Doppelbandpresse zurückgelegte Strecke konstant gehalten wird. Die Vorform wird also vorzugsweise isobar heiß zu dem Plattenmaterial verpresst. Entsprechend ist die verwendete Doppelbandpresse vorzugsweise eine sogenannte isobare Doppelbandpresse. In jedem Fall kann der Druck, der bei dem heißen Verpressen der Vorform zu dem Plattenmaterial erreicht wird, in einem Bereich zwischen 0,5 MPa und 10 MPa über dem Umgebungsdruck liegen. In der Regel beträgt der Druck, der bei dem heißen Verpressen der Vorform zu dem Plattenmaterial erreicht wird, mindestens 2 MPa.

Eine typische Verweilzeit der Vorform in dem Heißpressbereich, die sich als Quotient aus der Länge des Heißpressbereichs und der Fördergeschwindigkeit ergibt, mit welcher die Vorform zwischen dem Oberband und dem Unterband durch die Doppelbandpresse gefördert wird, liegt bei dem erfindungsgemäßen Verfahren in einem typischen Bereich zwischen 6,5 s und 1.300 s, bevorzugt zwischen 13 s und 250 s und besonders bevorzugt zwischen 18 s und 130 s.

An den Heißpressbereich kann sich ein Konsolidierungsbereich anschließen, in dem das Plattenmaterial zwischen dem Unterband und dem Oberband der Doppelbandpresse auf eine um wenigsten einige 10 K, d. h. um mindestens 20 K niedrigere Temperatur als in den Heißpressbereich und vorzugsweise auf eine Temperatur in einem Bereich zwischen 100 °C und Raumtemperatur abgekühlt und/oder auf einen niedrigeren Druck als in dem Heißpressbereich entspannt wird. Auch das Absenken der Temperatur und/oder des Drucks kann in Stufen erfolgen. Als günstig erweist es sich, in dem Konsolidierungsbereich nur die Temperatur abzusenken, aber im Sinne einer isobaren Verfahrensführung denselben Druck wie in dem Heißpressbereich aufrecht zu erhalten. Vorzugsweise tritt das Plattenmaterial also erst nach seiner teilweisen Abkühlung aus der Doppelbandpresse aus. Die isobare Verfahrensführung bis in den Konsolidierungsbereich der Doppelbandpresse hat sich in der Praxis der vorliegenden Erfindung als entscheidend herausgestellt, um prozesssicher hochgefülltes und dennoch flexibles sowie gasdichtes Plattenmaterial für Bipolarplatten herzustellen.

Eine Verweilzeit des Plattenmaterials in dem Konsolidierungsbereich, die sich als Quotient aus der Länge des Konsolidierungsbereichs und der Fördergeschwindigkeit ergibt, mit welcher die Vorform zwischen dem Oberband und dem Unterband durch die Doppelbandpresse gefördert wird, liegt typischerweise in einem Bereich zwischen 3 s und 600 s, bevorzugt zwischen 6 s und 115 s und besonders bevorzugt zwischen 8 s und 60 s. Es versteht sich, dass bei einer gegebenen Doppelbandpresse die Verweilzeiten in dem Heißpressbereich und dem Konsolidierungsbereich häufig in einem festen Verhältnis zueinander stehen. Dieses Verhältnis ist typischer Weise größer als 1:1. Oft liegt es bei oder etwas unter 2:1.

Bei dem erfindungsgemäßen Verfahren kann das noch heiße Plattenmaterial an mindestens einer seiner beiden Hauptseiten konturiert werden. Auch dies ist bei dem erfindungsgemäßen Verfahren trotz des hohen Füllungsgrad des Kunststoffs mit den elektrisch leitfähigen Partikeln auf Kohlenstoffbasis möglich. Das Konturieren erfolgt regelmäßig vor dem Konsolidierungsbereich, oder das Plattenmaterial muss vor dem Konturieren wieder erwärmt werden. Für das Konturieren kann eine Prägewalze eingesetzt werden. Das Plattenmaterial kann auch zwischen zwei Prägewalzen hindurchgeführt werden, um auf beiden seiner Hauptseiten konturiert zu werden. Dabei kann das Oberband bzw. das Unterband vor der jeweiligen Prägewalze enden und ein neues Oberband bzw. Unterband nach der Prägewalze beginnen, um das Plattenmaterial durch den Konsolidierungsbereich zu führen. Es versteht sich, dass die Prägewalzen bei dem erfindungsgemäßen Verfahren eine Umfangsgeschwindigkeit aufweisen, die der Fördergeschwindigkeit der Doppelbandpresse möglichst genau entspricht, um eine Scherung des Plattenmaterials beim Konturieren zu verhindern. Durch die homogene Zusammensetzung des Plattenmaterials wirkt sich jedoch eine mit dem Konturieren einhergehende Verdrängung von Material des Plattenmaterials nicht oder im Wesentlichen nicht negativ auf die elektrische Leitfähigkeit der hergestellten Platten zwischen ihren Hauptseiten auf.

Das Plattenmaterial und entsprechend die daraus durch Unterteilen gewonnen Platten weisen eine typische Dicke zwischen 0,4 mm und 2,5 mm auf, d. h. mit dem erfindungsgemäßen Verfahren können sowohl vergleichsweise dünne als auch relativ dicke Platten hergestellt werden, die als Bipolarplatten oder Rohlinge dafür verwendbar sind.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Ober- oder Unterband die Rede ist, ist dies so zu verstehen, dass genau ein Ober- oder Unterband, zwei Ober- oder Unterbänder oder mehr Ober- oder Unterbänder vorhanden sind. Die in den Patentansprüchen angeführten Merkmale können durch weitere Merkmale ergänzt werden oder die einzigen Merkmale sein, die das jeweilige Verfahren aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist ein Ablaufdiagramm des erfindungsgemäßen Verfahrens.
- **Fig. 2**: zeigt schematisch eine Anlage zur Durchführung des erfindungsgemäßen Verfahrens.
- **Fig. 3**: zeigt eine mögliche Ausgestaltung eines Details der Anlage gemäß Fig. 1 betreffend das Ausbilden einer Vorform.
- **Fig. 4**: zeigt eine mögliche Ausgestaltung der Anlage gemäß Fig. 2 betreffend ein direktes Unterteilen eines Plattenmaterials in als Bipolarplatten oder als Rohlinge für Bipolarplatten verwendbare Platten.
- **Fig. 5**: zeigt eine alternative Ausgestaltung der Anlage gemäß Fig. 2 betreffend ein Aufwickeln des Plattenmaterials zu einem Coil.
- **Fig. 6**: zeigt ein Detail einer Abwandlung der Anlage gemäß Fig. 2 mit Konturierungseinrichtungen; und
- **Fig. 7**: zeigt eine konkrete Ausgestaltung der Konturierungseinrichtungen gemäß Fig. 6.

### FIGURENBESCHREIBUNG

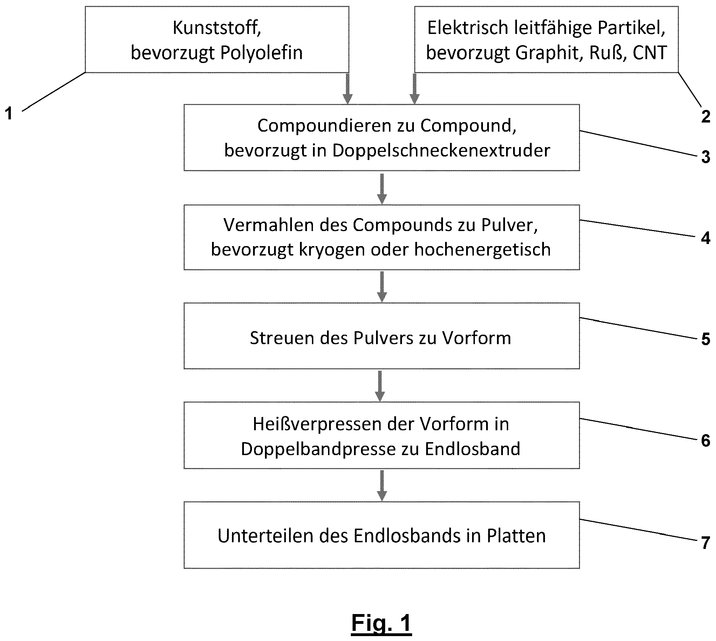

Bei dem erfindungsgemäßen Verfahren gemäß dem Blockdiagramm in **Fig. 1** werden ein Kunststoff 1, bei dem es sich bevorzugt um ein Polyolefin handelt, und elektrisch leitfähige Partikel 2, bei denen es sich bevorzugt um Graphit, Ruß und/oder CNT handelt, in einem ersten Verfahrensschritt 3 zu einem Compound compoundiert. Dieses Compoundieren erfolgt bevorzugt in einem Doppelschneckenextruder, dessen Schnecken gleichläufig drehangetrieben werden. Das Compound wird in einem nächsten Schritt 4 vermahlen. Das Vermahlen erfolgt kryogen oder kryogen und hochenergetisch und zwar derart, dass eine Partikelgröße D90 von < 100 µm erreicht wird. D. h., mindestens 90 Gewichtsprozent der Teilchen des Pulvers weisen eine Partikelgröße < 100 µm auf. In einem anschließenden Verfahrensschritt 5 wird das Pulver zu einer flächigen Vorform gestreut. Dann wird in einem Schritt 6 die Vorform in einer Doppelbandpresse heiß zu einem bandförmigen Plattenmaterial verpresst. Letztlich erfolgt in einem Schritt 7 das Unterteilen des Plattenmaterials in Platten. Dieser Schritt 7 kann zeitlich und räumlich abgesetzt von den anderen Schritten 3 bis 6 erfolgen. Beispielsweise kann das Plattenmaterial zunächst zu einem Coil aufgewickelt und dann später an einer oder beider seiner Hauptseiten konturiert werden, bevor es in Platten unterteilt wird, die dann jeweils als Bipolarplatte oder als Rohling für eine Bipolarplatte Verwendung finden können. Grundsätzlich können natürlich auch die vorangegangenen Schritte 3, 4, 5 und 6 zeitlich und räumlich voneinander getrennt durchgeführt werden, wobei es jedoch sinnvoll ist, zumindest die Schritte 5 und 6 sowohl zeitlich als auch räumlich direkt aufeinander folgen zu lassen.

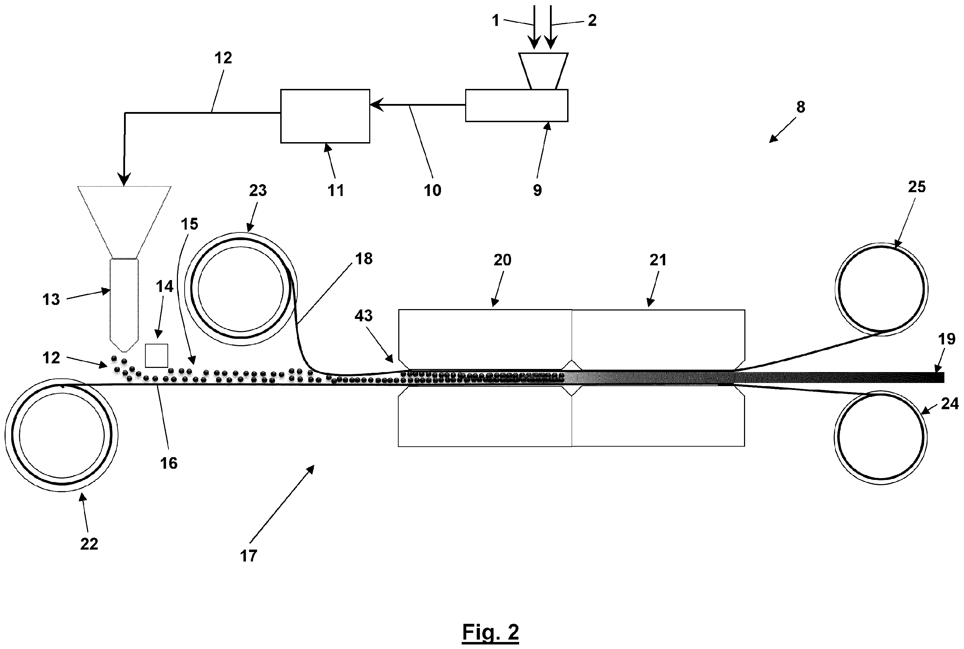

Die in **Fig. 2** schematisch dargestellte Anlage 8 umfasst einen Doppelschneckenextruder 9 in dem der Kunststoff 1 und die Partikel 2 zu dem Compound 10 compoundiert werden. In einer Mühle 11 wird das Compound 10 kryogen oder kryogen und hochenergetisch zu dem Pulver 12 vermahlen. Mit einer Streueinrichtung 13 und einer Rakel 14 wird das Pulver 12 zu der Vorform 15 definierter Dicke auf ein vorgezogenes Unterband 16 einer Doppelbandpresse 17 aufgestreut. Zwischen dem Unterband 16 und einem Oberband 18 der Doppelbandpresse 17 wird die Vorform 15 dann heiß zu dem Plattenmaterial 19 verpresst. Die Doppelbandpresse 17 weist direkt im Anschluss an einen Einlaufbereich 43 einen beheizten Heißpressbereich 20 und dann einen gekühlten Konsolidierungsbereich 21 auf. In dem Einlaufbereich 43 kann die Vorform 15 zunächst ohne Erwärmung unter ansteigendem Druck kompaktiert wird, bevor sie dann unter erhöhtem Druck und erhöhter Temperatur heiß zu dem Plattenmaterial 19 verpresst wird. In dem gekühlten Konsolidierungsbereich 21 der Bandpresse erfolgt eine Konsolidierung des Plattenmaterials 19 bei abnehmender Temperatur, wobei der erhöhte Druck aufrecht erhalten wird. Die Doppelbandpresse 17 ist hier so skizziert, dass ihr Unterband 16 und ihr Oberband 18 durch den Heißpressbereich 20 und den Konsolidierungsbereich 21 gezogen werden und dabei von Vorratsrollen 22 und 23 abgewickelt und auf Zugrollen 24 und 25 aufgewickelt werden. Es versteht sich, dass das Unterband 16 und das Oberband 18 auch als Endlosbänder ausgebildet sein und außen um den Heißpressbereich 20 und den Konsolidierungsbereich 21 zurücklaufen können.

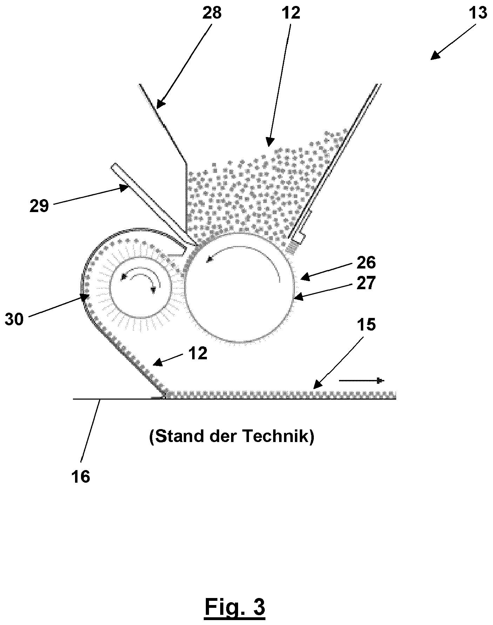

**Fig. 3** illustriert eine mögliche konkrete Ausführungsform der Streueinrichtung 13, wie sie aus dem Stand der Technik grundsätzlich bekannt ist und wie sie bei dem erfindungsgemäßen Verfahren zum Streuen der Vorform 15 aus dem Pulver 12 verwendet werden kann. Hier rotiert eine Dosierwalze 26 mit Vertiefungen in ihrem Walzenmantel 27 am unteren Auslass eines Pulverreservoirs 28. Ein Abstreifer 29 lässt nur das Pulver 12 aus dem Pulverreservoir 28 austreten, dass sich in den Vertiefungen in dem Walzenmantel 27 befindet. Hinter dem Abstreifer 29 wird das Pulver 12 mit einer Bürstenwalze 30 von der Dosierwalze 26 abgenommen und derart dosiert zu der Vorform 15 auf dem Unterband 16 gestreut.

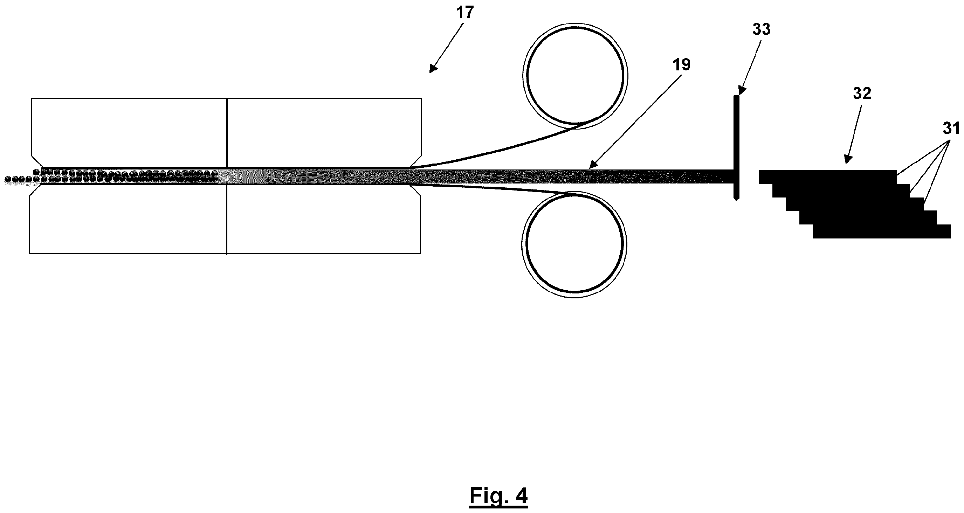

**Fig. 4** illustriert, wie im Anschluss an die Doppelbandpresse 17 das Plattenmaterial 19 direkt in die Platten 31 unterteilt und zu einem Stapel 32 gestapelt werden kann. Hierzu ist ein sich intermittierend mit dem Plattenmaterial 19 vorbewegendes, das Plattenmaterial 19 dabei unterteilendes und dann schnell wieder zurücklaufendes Messer 33 vorgesehen.

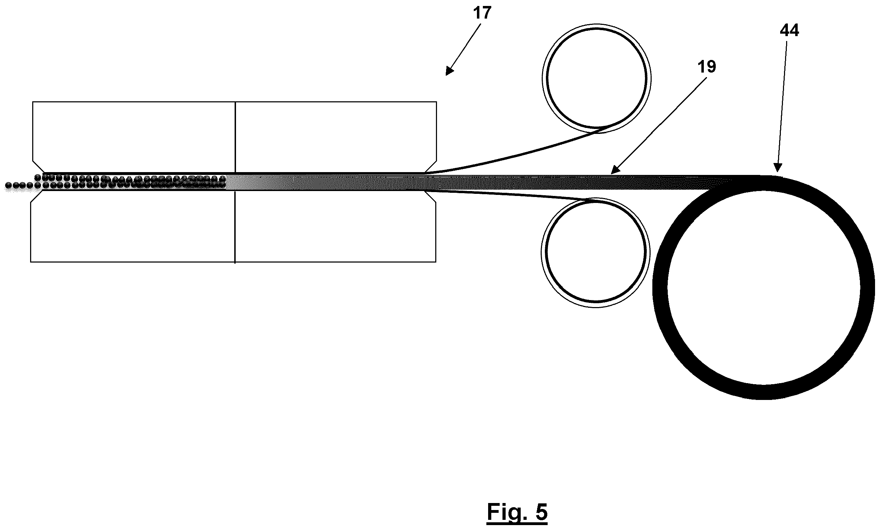

In **Fig. 5** ist illustriert, wie im Anschluss an die Doppelbandpresse 17 das Plattenmaterial 19 zunächst zu einem Coil 44 aufgewickelt wird. Das Coil 44 kann zwischengelagert, und erst später zur Unterteilung des Plattenmaterials 19 in die Platten 31 oder zur vorherigen weiteren Bearbeitung des Plattenmaterials 19 wieder abgewickelt werden.

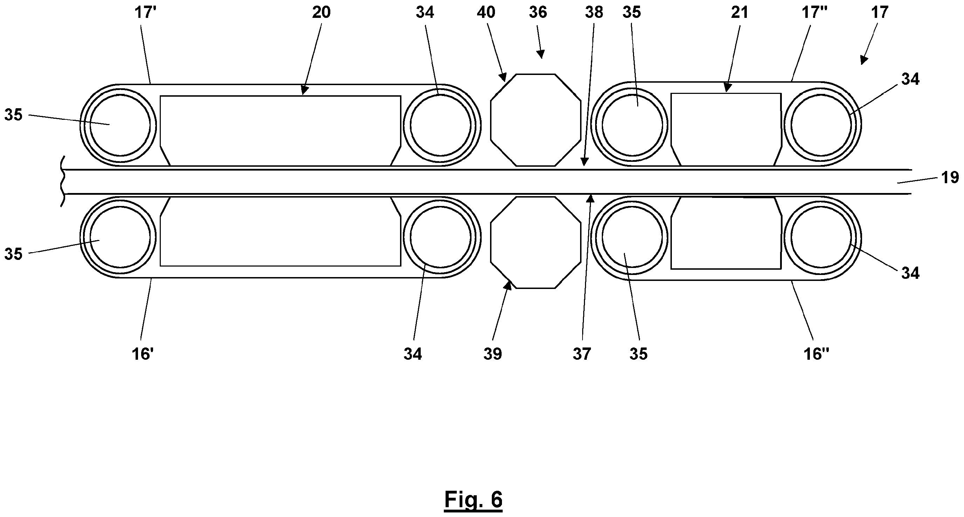

**Fig. 6** zeigt eine Ausführungsform der Doppelbandpresse 17, deren Teile 20 und 21 voneinander beabstandet sind und zwar so, dass auch das Unterband 16 und das Oberband 18 jeweils in zwei separate Teile 16' und 18' bzw. 16" und 18" unterteilt sind. Dabei sind die Teile 16 und 16' bzw. 18 und 18' des Unterbands 16 bzw. des Oberbands 18 jeweils als Endlosbänder um Antriebsrollen 34 und Umlenkrollen 35 geführt. Zwischen den Teilen 20 und 21 ist eine Konturierungseinrichtung 36 vorgesehen, die das Plattenmaterial 19 an seinen Hauptseiten 37 und 38 konturiert. Dazu läuft das Plattenmaterial 19 durch einen Walzenspalt zwischen Prägewalzen 39 und 40 hindurch.

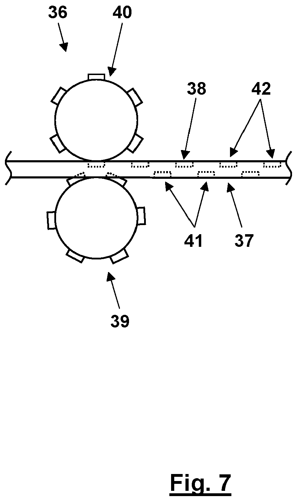

**Fig. 7** illustriert schematisch, wie mit den Prägewalzen 39 und 40 der Konturierungseinrichtung 36 beispielsweise Kanäle 41 und 42 in den Hauptseiten 37 und 38 ausgebildet werden können. Dies ist aber nur ein Beispiel für eine Konturierung mit Hilfe der Konturierungseinrichtung 36.

Das erfindungsgemäß hergestellte Plattenmaterial 19 zeichnet sich durch eine hohe elektrische Leitfähigkeit und eine besonders hohe Isotropie seiner elektrischen Leitfähigkeit aus, so dass diese auch in der Richtung zwischen den Hauptseiten 37 und 38 des Plattenmaterials und der daraus durch Unterteilen hergestellten Platten vorhanden und nutzbar ist. Zudem ist das Plattenmaterial 19 bei Verwendung eines geeigneten Kunststoffs ausreichend flexibel, um beschädigungsfrei zu dem Coil 44 aufgewickelt zu werden, seinerseits gasdicht und zur Ausbildung von Gasdichtungen in einem Brennstoffzellenstapel geeignet.

### BEZUGSZEICHENLISTE

- 1: Kunststoff
- 2: Partikel
- 3: Schritt Compoundieren
- 4: Schritt Vermahlen
- 5: Schritt Streuen
- 6: Schritt heiß Verpressen
- 7: Schritt Unterteilen
- 8: Anlage
- 9: Doppelschneckenextruder
- 10: Compound
- 11: Mühle
- 12: Pulver
- 13: Streueinrichtung
- 14: Rakel
- 15: Vorform
- 16: Unterband
- 17: Doppelbandpresse
- 18: Oberband
- 19: Plattenmaterial
- 20: Heißpressbereich
- 21: Konsolidierungsbereich
- 22: Vorratsrolle
- 23: Vorratsrolle
- 24: Zugrolle
- 25: Zugrolle
- 26: Dosierwalze
- 27: Walzenmantel
- 28: Pulverreservoir
- 29: Abstreifer
- 30: Bürstenwalze
- 31: Platte
- 32: Stapel
- 33: Messer
- 34: Antriebsrolle
- 35: Umlenkrolle
- 36: Konturierungseinrichtung
- 37: Hauptseite
- 38: Hauptseite
- 39: Prägewalze
- 40: Prägewalze
- 41: Kanal
- 42: Kanal
- 43: Einlaufbereich
- 44: Coil

## Patentansprüche

1. Verfahren zum kontinuierlichen Herstellen von in Bipolarplatten oder Rohlinge für Bipolarplatten aufteilbarem bandförmigem Plattenmaterial (19) aus mit elektrisch leitfähigen Partikeln (2) versetztem Kunststoff (1),
- wobei die Partikel (2) und der Kunststoff (1) zu einem Compound (10) compoundiert werden, wobei ein Anteil der Partikel an dem Compound (10) zwischen 75 Gewichtsprozent und 90 Gewichtsprozent beträgt,
- wobei das Compound (10) zu einem Pulver (12) vermahlen wird,
- wobei das Pulver (12) zu einer Vorform (15) gestreut wird und
- wobei die Vorform (15) heiß zu dem Plattenmaterial (19) verpresst wird,
**dadurch gekennzeichnet,**
- **dass** das Compound (10) kryogen zu dem Pulver (12) vermahlen wird und
- **dass** die Vorform (15) zwischen einem Unterband (16) und einem Oberband (18) einer Doppelbandpresse (17) heiß zu dem Plattenmaterial (19) verpresst wird.

2. Verfahren nach Anspruch 1, **dadurch gekennzeichnet, dass** die Partikel (2) Partikel auf Kohlenstoffbasis, vorzugsweise Rußpartikel und/oder Graphitpartikel und/oder CNT, sind.

3. Verfahren nach Anspruch 1 oder 2, **dadurch gekennzeichnet, dass** das Compound (10) unterhalb -70 °C kryogen und/oder hochenergetisch mit einem Energieeinsatz von mindestens 2.000 J/g Compound zu dem Pulver (12) vermahlen wird, wobei das Pulver (12) vorzugsweise eine Teilchengröße aufweist, bei der mindestens 90 Gewichts-% der Teilchen kleiner als 100 µm sind.

4. Verfahren nach einem der vorhergehenden Ansprüche, **dadurch gekennzeichnet, dass** die Vorform (15) unter einem in einem Bereich zwischen 0,5 MPa und 10 MPa gegenüber Umgebungsdruck erhöhten Druck heiß zu dem Plattenmaterial (19) verpresst wird.

5. Verfahren nach Anspruch 4, **dadurch gekennzeichnet, dass** die Vorform (15) isobar heiß zu dem Plattenmaterial (19) verpresst wird.

6. Verfahren nach Anspruch 4 oder 5, **dadurch gekennzeichnet, dass** die Vorform (15) für einen Zeitraum in einem Bereich zwischen 13 s und 250 s und bevorzugt zwischen 18 s und 130 s heiß zu dem Plattenmaterial (19) verpresst wird.

7. Verfahren nach einem der Ansprüche 4 bis 6, **dadurch gekennzeichnet, dass** das Plattenmaterial (19), zu dem die Vorform (15) heiß verpresst wurde, zwischen dem Unterband (16) und dem Oberband (18) der Doppelbandpresse (17) auf eine um wenigsten 20 K niedrigere Temperatur als beim heißen Verpressen und vorzugsweise auf eine Temperatur in einem Bereich zwischen 100 °C und Raumtemperatur abgekühlt wird.

8. Verfahren nach Anspruch 7 soweit rückbezogen auf Anspruch 5, **dadurch gekennzeichnet, dass** beim Abkühlen derselbe Druck wie beim heißen Verpressen der Vorform (15) zu dem Plattenmaterial (19) aufrecht erhalten wird, bis das Plattenmaterial (19) aus der Doppelbandpresse (17) austritt.

9. Verfahren nach Anspruch 7 oder 8, **dadurch gekennzeichnet, dass** das Plattenmaterials (19) zwischen dem Unterband (16) und dem Oberband (18) der Doppelbandpresse (17) für einen Zeitraum in einem Bereich zwischen 6 s und 115 s und besonders bevorzugt zwischen 8 s und 60 s abgekühlt wird.

10. Verfahren nach einem der vorhergehenden Ansprüche, **dadurch gekennzeichnet, dass** der Kunststoff (1) ein Thermoplast, bevorzugt ein Thermoplast auf polyolefinischer Basis, mehr bevorzugt ein PE oder PP, ist.

11. Verfahren nach Anspruch 10, **dadurch gekennzeichnet, dass** die Vorform (15) bei einer Temperatur in einem Bereich zwischen 170 °C und 260 °C heiß zu dem Plattenmaterial (19) verpresst wird, wenn der Kunststoff (1) ein Thermoplast auf polyolefinischer Basis ist.

12. Verfahren nach einem der vorhergehenden Ansprüche, **dadurch gekennzeichnet, dass** die Partikel (2) und der Kunststoff (1) in einem Schneckenextruder, vorzugsweise in einem Doppelschneckenextruder (11), dessen Schnecken beim Compoundieren (3) gleichläufig drehangetrieben werden, zu dem Compound (10) compoundiert werden.

13. Verfahren nach einem der vorhergehenden Ansprüche, **dadurch gekennzeichnet, dass** das Plattenmaterial (19) nach der Doppelbandpresse (17) in Platten (31) unterteilt oder zu einem Coil (44) aufgewickelt wird.

14. Verfahren nach einem der vorhergehenden Ansprüche, **dadurch gekennzeichnet, dass** das heiße Plattenmaterial (19) an mindestens einer seiner beiden Hauptseiten (37, 38) konturiert wird, vorzugsweise mit einer Prägewalze (39, 40).

15. Verfahren nach einem der vorhergehenden Ansprüche, **dadurch gekennzeichnet, dass** das Plattenmaterial (19) eine Dicke in einem Bereich zwischen 0,4 mm und 2,5 mm aufweist.
